# FASCICULE DE BREVET EUROPEEN

(11) **EP 0 912 462 B1**
(45) Date de publication et mention de la délivrance du brevet: **22.10.2003**
(21) Numéro de dépôt: 98910818.8
(22) Date de dépôt: 24.02.1998
(51) Int. Cl.: C04B 40/00, C04B 24/12, C04B 103/40

(54) **ADJUVANT POUR SUSPENSIONS AQUEUSES DE PARTICULES MINERALES ET MELANGES A BASE DE LIANT HYDRAULIQUE**
ZUSATZMITTEL FÜR WÄSSRIGE SUSPENSIONEN VON ANORGANISCHEN PARTIKELN UND HYDRAULISCHEN BINDEMITTELGEMISCHEN
ADDITIVE FOR AQUEOUS SUSPENSIONS OF MINERAL PARTICLES AND HYDRAULIC MORTAR BASE MIXTURES

(30) Priorité: 25.02.1997 FR 9702460
(43) Date de publication de la demande: 06.05.1999
(73) Titulaire: Chryso S.A.S., 92446 Issy-Les-Moulineaux (FR)
(72) Inventeur: MOSQUET, Martin, f-45300 Dadonville (FR); BISSON, Didier, F-45300 Pithiviers (FR); WATT, Olivier, F-45770 Saran (FR)
(74) Mandataire: Tilloy, Anne-Marie
(86) Numéro de dépôt international: FR9800357
(87) Numéro de publication internationale: WO98038142

(56) Documents cités:
- EP-A- 0 519 747
- WO-A-91/03437
- FR-A- 2 706 447
- LU-A- 56 396
- CHEMICAL ABSTRACTS, vol. 112, no. 20, 14 mai 1990 Columbus, Ohio, US; abstract no. 184859, K. SESTAUER ET AL.: page 352; XP000151662 & CS 254 423 A (ID.)

## Description

La présente invention se rapporte à un adjuvant pour suspensions aqueuses de particules minérales et mélanges à base de liant hydraulique et aux produits résultants contenant de tels adjuvants.

La présente invention se rapporte également à un procédé permettant simultanément de traiter les suspensions aqueuses de particules minérales et les mélanges à base de liant hydraulique à l'aide d'un additif hydrosoluble ou hydrodispersable et d'y contrôler l'air entraîné.

L'expression "mélanges à base de liant hydraulique" désigne les coulis, les mortiers et les bétons contenant des composés minéraux qui durcissent après mélange avec de l'eau, tels que les ciments comme le ciment Portland, divers ciments mélangés ou les ciments alumineux, les plâtres, les sulfates de calcium, la chaux, etc.

De manière connue, des additifs sont de plus en plus utilisés dans la mise en oeuvre des suspensions aqueuses minérales ainsi que celle des coulis, des mortiers et des bétons à base de liant hydraulique, pour conférer des propriétés particulières soit au produit frais (fluidité, retard de prise, homogénéité, etc.), soit au produit durci (résistances mécaniques, aspect de surface, perméabilité, etc.).

Ainsi, il est connu d'introduire des fluidifiants dans les suspensions aqueuses de particules minérales pour en abaisser la viscosité ou pour diminuer la teneur en eau de ces suspensions. Les suspensions concernées sont plus ou moins concentrées et contiennent un ou plusieurs composés solides minéraux en particules. Ce sont par exemple des suspensions de sels de calcium, comme le carbonate de calcium ou le sulfate de calcium, ou des suspensions d'oxydes minéraux, comme le dioxyde de titane ou l'oxyde de fer. Ce n'est qu'après avoir été fluidifiées que ces suspensions peuvent servir à la préparation de produits industriels divers dont des peintures, des produits pour l'enduction du papier et des formulations pour des caoutchoucs et pour des résines synthétiques. De même, il est également connu d'ajouter aux liants hydrauliques tels que les ciments, les plâtres, les sulfates de calcium ou la chaux, des fluidifiants pour diminuer la teneur en eau du mélange de liant hydraulique. De ce fait, le mélange de liant hydraulique présente, après durcissement, une structure plus dense. Ceci se traduit par une résistance mécanique plus élevée.

Mais, certains additifs utilisés pour leurs effets avantageux présentent également un effet secondaire conduisant à un entraînement excessif d'air dans les suspensions aqueuses de particules minérales et dans les coulis, les mortiers et les bétons, pendant le malaxage.
Or, cet air peut être indésirable pour les caractéristiques finales des matériaux.

En effet, un entraînement excessif d'air peut conduire à un produit fini ayant un aspect de surface non satisfaisant et/ou des résistances mécaniques réduites et/ou une perméabilité importante.

Parmi les additifs susceptibles de conduire à une augmentation de l'air entraîné, on peut citer des agents réducteurs d'eau et superplastifiants tels que les lignosulfonates, les produits de la condensation du formaldéhyde et de naphtalènes sulfonés, et divers composés renfermant des chaînes polycarboxyliques et/ou polyéthers, des retardateurs de prise ou des accélérateurs de prise ou de durcissement tels que les alcanolamines.

Il est connu d'utiliser des agents antimousse pour réduire l'entraînement d'air. Or, pour des raisons de commodités, il est souhaitable de pouvoir disposer d'un mélange commercialisable renfermant à la fois l'additif et l'agent antimousse. La difficulté généralement rencontrée réside dans la miscibilité de l'agent antimousse souvent peu ou non hydrosoluble, et l'additif généralement hydrosoluble et prévu en solution aqueuse.

Un tel mélange, gardé au repos pendant le stockage, tend à perdre son caractère homogène : le plus souvent, l'antimousse, plus léger que la solution, se concentre dans la partie supérieure du stockage et peut donc se trouver en quantité insuffisante dans la partie inférieure du stockage où se trouve généralement le niveau de soutirage.

On trouve décrites dans l'art antérieur plusieurs techniques pour éviter un entraînement d'air excessif dans les mélanges à base de liant hydraulique faisant usage d'un agent antimousse, notamment :
- le brevet européen n°0 519 747, qui décrit un agent antimousse, soluble dans l'eau, et facilement dispersable dans les compositions à base de liant hydraulique. Cet agent antimousse est constitué d'une solution aqueuse de pH compris entre 6 et 8, contenant au moins une N-alkylalcanolamine ou une N-alkyhydroxyamine ;
- le brevet français n°2 706 447 qui décrit un adjuvant pour contrôler la fluidité des compositions de ciment, sous la forme d'une solution ou une dispersion stable contenant :
   a) un agent dispersant du ciment qui est un polymère en solution aqueuse ; et
   b) un agent antimousse particulier, à base d'oxyalkylène, soit dissout dans la solution de polymère, soit dispersé de manière stable en particules n'ayant pas plus de 20 microns de diamètre.

Ces deux brevets ne divulguent aucune méthode générale pour rendre compatibles une grande variété d'agents antimousse peu ou non hydrosolubles et une solution ou une dispersion aqueuse d'un additif pour suspensions aqueuses de particules minérales et mélanges à base de liant hydraulique et réaliser un mélange uniforme, stable au stockage et commercialisable.

On a maintenant trouvé qu'il est possible de fabriquer et commercialiser un adjuvant sous la forme d'un mélange uniforme, stable au stockage, qui permette de bénéficier des avantages d'un additif, hydrosoluble ou hydrodispersable, et de limiter l'air entraîné dans les suspensions aqueuses de particules minérales et mélanges à base de liant hydraulique.

L'adjuvant selon l'invention est caractérisé en ce qu'il est sous la forme d'un mélange uniforme comprenant :
- de l'eau ;
- au moins un agent antimousse non hydrosoluble ou faiblement hydrosoluble ;
- au moins un additif, hydrosoluble ou hydrodispersable, pour suspensions aqueuses de particules minérales et mélanges à base de liant hydraulique ;
- au moins un composé organique (A) contenant :
   . au moins une fonction amine primaire, secondaire ou tertiaire, éventuellement partiellement ou totalement neutralisée par un acide de Brönsted, organique ou inorganique ;
   . et au moins une chaîne alkyle ou alkyle-aryle, linéaire ou ramifiée, saturée ou insaturée, cette chaîne comprenant au moins 8 atomes de carbone et éventuellement, des hétéroatomes choisis parmi l'oxygène, le soufre ou l'azote ;
      la fonction amine dudit composé organique (A) peut être en équilibre avec la fonction ammonium correspondante ;
- au moins un stabilisant minéral quand le pH dudit mélange est supérieur à 7 ;
- éventuellement, un acide ou une base pour ajuster le pH dudit mélange

Dans le cadre de la présente invention :
- par "agent antimousse non hydrosoluble ou faiblement hydrosoluble", on entend un agent antimousse faiblement ou non soluble dans les milieux aqueux à température ambiante (environ 20°C) et à la pression atmosphérique ;
- par "mélange uniforme", on entend un mélange qui, laissé au repos, peut aller d'un mélange limpide (comme une microémulsion) à un mélange trouble (comme un émulsion huile dans eau). Parfois, une fine pellicule, généralement de la mousse, pourra être présente à la surface du mélange uniforme.

De manière surprenante, grâce à l'adjuvant selon l'invention, les résultats suivants ont été atteints :
- l'adjuvant présente, pour une grande variété d'agents antimousse peu ou pas hydrosolubles et une grande variété d'additifs hydrosolubles ou hydrodispersables, une meilleure stabilité au stockage par rapport à un témoin exempt du composé organique (A) décrit plus haut. En effet, l'adjuvant selon l'invention reste un mélange uniforme pendant au moins 24 heures ;
- l'adjuvant peut être commercialisé sous la forme d'un conditionnement prêt à l'emploi, plus ou moins concentré, à diluer éventuellement avant emploi. Avantageusement, l'extrait sec de l'adjuvant varie entre environ 5 % en poids et environ 80 % en poids, de préférence entre environ 10 % en poids et environ 70 % en poids, encore mieux entre environ 20 % en poids et environ 60 % en poids.
- l'adjuvant est dispersable dans les suspensions aqueuses de particules minérales et les mélanges à base de liant hydraulique, et l'agent antimousse qu'il renferme peut alors efficacement agir pour diminuer le volume d'air entraîné.

Conformément à la présente invention, le pH de l'adjuvant peut être acide (inférieur à 7) ou basique (supérieur à 7).
Lorsque son pH est basique, l'adjuvant selon l'invention comprend obligatoirement au moins un stabilisant minéral qui contribue à maintenir le mélange uniforme. En revanche, lorsque le pH de l'adjuvant est acide, la présence de stabilisant minéral dans l'adjuvant n'est pas indispensable.
La granulométrie du stabilisant minéral, qui est constituée de grains finement divisés, est de préférence telle que au moins 90 % des grains passent au travers d'un tamis à mailles carrées de 50 µm de côté, de préférence encore de 10 µm de côté.
De préférence, le stabilisant minéral présente une capacité à développer une viscosité supplémentaire sous l'effet d'un gradient de cisaillement et en présence d'eau, par exemple lors de l'utilisation de broyeurs à billes ou de mélangeurs à grande vitesse munis de pâles défloculeuses. A titre d'exemple de stabilisant minéral convenant à l'invention, on peut citer des argiles, telles que les sépiolites, les bentonites ou un mélange de ces types d'argiles. Les meilleurs résultats ont été obtenus avec les sépiolites. Avantageusement, les sépiolites sont utilisées à raison de 0,5 % à 2,5 % en poids rapporté au poids total en humide de l'adjuvant.
Lorsque l'adjuvant selon l'invention est exempt de stabilisant minéral, le pH de l'adjuvant doit être acide (inférieur à 7), de préférence inférieur ou égal à 6, encore mieux compris entre 2 et 6 (inclus). En effet, à pH supérieur ou égal à 7, en l'absence de stabilisant minéral, la stabilité et, par voie de conséquence, l'homogénéité de l'adjuvant disparaissent : le mélange uniforme devient le plus souvent instable, c'est-à-dire une séparation des phases organique et aqueuse est constatée.

L'un des constituants essentiels de l'adjuvant selon l'invention est un composé organique (A) contenant au moins une fonction amine primaire, secondaire ou tertiaire, éventuellement partiellement ou totalement neutralisée par un acide de Brönsted, et au moins une chaîne alkyle ou alkyle-aryle, linéaire ou ramifiée, saturée ou insaturée, cette chaîne comprenant au moins 8 atomes de carbone, de préférence au moins 12 atomes de carbone, et éventuellement des hétéroatomes choisis parmi l'oxygène, le soufre ou l'azote : dans la suite de la description, il sera désigné simplement sous le vocable de "composé organique (A)".

Il a été trouvé que le composé organique (A) permet de maintenir l'uniformité de l'adjuvant pendant 24 heures ou plus. Le composé organique (A) constitue donc le stabilisant organique de l'adjuvant selon l'invention.

L'adjuvant selon l'invention peut renfermer, à titre de stabilisant organique, plusieurs composés organiques (A) de nature chimique différente.

Conformément à une variante préférentielle de l'invention, la formule du composé organique (A) est : 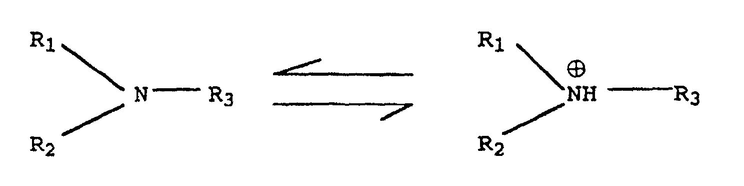 dans laquelle :
- R₁ est une chaîne alkyle ou alkyle-aryle, linéaire ou ramifiée, saturée ou insaturée, contenant au moins 8 atomes de carbone, de préférence au moins 12 atomes de carbone, encore mieux au plus 22 atomes de carbone. Eventuellement, R₁ peut comprendre un ou plusieurs hétéroatomes choisis parmi l'oxygène, l'azote ou le soufre pour former des groupes fonctionnels comme des groupes éthers ou thioéthers ou des groupes alcools ou thioalcools ;
- R₂ est un atome d'hydrogène, ou une chaîne de motifs oxyalkylènes R₄-O où les R₄ sont semblables ou différents entre eux et représentent un alkylène comme l'éthylène, le propylène ou le butylène, cette chaîne de motifs oxyalkylènes R₄-O comportant en position terminale un atome d'hydrogène ou un groupe alkyle ou alkyle-aryle ;
- R₃ est un atome d'hydrogène ou un radical indépendamment choisi parmi les définitions susmentionnées pour R₁ et R₂ ;
- le nombre total de motifs (R₄-O) pouvant être présents dans R₂ et R₃, lorsque R₄ est l'éthylène, est de préférence au maximum égal à 12, de préférence encore au maximum égal à 8.

Le nombre total de motifs (R₄-O) lorsque R₄ est le propylène ou le butylène, n'est pas critique. Toutefois, le nombre total de tels motifs sera de préférence au plus égal à 5.

De préférence, le nombre de groupes fonctionnels azotés dans le composé organique (A) est au plus égal à 2 ;

Les composés organiques (A) ou stabilisants organiques préférés, c'est-à-dire avec lesquels des résultats très satisfaisants ont été obtenus, sont l'amine oléique et des dérivés de l'amine oléique, contenant éventuellement des motifs (R₄-O) selon les définitions et conditions précitées dans la présente description. Cette amine oléique est éventuellement en mélange avec d'autres composés organiques (A) de nature chimique différente. Les meilleurs résultats ont été obtenus avec les amines suivantes, protonées ou non : l'amine oléique, l'amine de coprah et l'amine de suif, chacune de ces amines ayant une mole d'oxyde d'éthylène ; l'amine oléique à cinq moles d'oxyde d'éthylène ; le N,N-bis(2 hydroxyéthyl)oleylamine (ou amine oléique à deux moles d'oxyde d'éthylène). Des résultats satisfaisants ont également été obtenus avec les amines qui suivent, protonées ou non : l'amine de suif à cinq moles d'oxyde d'éthylène, l'amine de suif à sept moles d'oxyde d'éthylène, l'amine de coprah à deux moles d'oxyde d'éthylène.

Comme indiqué plus haut, le composé organique (A) peut comprendre deux groupes fonctionnels azotés et ainsi appartenir à la famille des diamines. A titre d'exemple, on peut citer la N,N',N'-tri(2 hydroxyéthyl)N-suif-propylène diamine.

L'anion (ou les différents anions) associé au composé organique (A) dans le cas où le pH de l'adjuvant selon l'invention est acide, peut être constitué par la partie anionique d'un acide de Brönsted, organique ou inorganique, introduit lors de la préparation de l'adjuvant afin de lui conférer un pH acide (inférieur à 7). A titre d'exemple de tels anions, on peut citer F⁻, Cl⁻, Br⁻, I⁻, (1/2)SO₄²⁻, (1/3)PO₄³⁻, (1/2)HPO₃²⁻, NO₃⁻, HCO₂⁻, CH₃CO₂⁻, et les anions des acides carboxyliques ayant de préférence au plus 10 atomes de carbone. L'anion associé au composé organique (A) dans le cas où le pH de l'adjuvant selon l'invention est acide, peut également provenir de l'additif hydrosoluble ou hydrodispersable prévu dans l'adjuvant, si cet additif peut conduire, à lui seul, à un pH acide. A titre d'exemple de tels additifs, on peut citer les agents dispersants renfermant des fonctions phosphoniques, phosphoriques, sulfoniques et carboxyliques.

L'additif hydrosoluble ou hydrodispersable que renferme l'adjuvant selon l'invention peut être choisi parmi les agents permettant de réduire la quantité d'eau de gâchage, les dispersants, les fluidifiants, les plastifiants, les hydrofuges de masse ou les retardateurs ou accélérateurs de prise ou de durcissement.
L'adjuvant selon l'invention peut comprendre une combinaison de plusieurs des additifs hydrosolubles ou hydrodispersables précités.

Plus particulièrement, l'invention convient à la préparation de mélange uniforme d'agents antimousse peu ou pas hydrosoluble et d'additifs hydrosolubles comportant au moins une chaîne polyéther, plus précisément les dispersants comportant une ou plusieurs chaînes polycarboxyliques et une ou plusieurs chaînes polyéthers ainsi que les dispersants comportant au moins un groupement amino-alkylène phosphonique, éventuellement salifié, et au moins une chaîne polyoxyalkylée, décrits dans le brevet européen n°0 663 892.

Parmi les agents antimousse non hydrosolubles ou faiblement hydrosolubles convenant à l'invention, on peut citer des huiles minérales, les esters phosphoriques, les copolymères d'oxyde d'éthylène/oxyde de propylène et les alkylpolyalkoxyesters. De préférence, les agents antimousse retenus sont ceux qui sont miscibles avec les composés organiques (A) décrits plus haut, c'est-à-dire ceux qui peuvent conduire à un mélange homogène avec l'un de ces composés organiques (A). De préférence encore, on les choisit dans la famille des esters phosphoriques.

La quantité massique de composé organique (A) à prévoir est fonction de la composition de l'adjuvant selon l'invention. On utilise de préférence un rapport massique de composé organique (A)/agent antimousse compris entre environ 0,01 et environ 5.

Généralement, un excès de composé organique (A) par rapport à la quantité nécessaire à la stabilité de l'adjuvant selon l'invention n'est pas souhaitable tout d'abord pour des raisons de coût de la formulation, et aussi en raison du volume en air qui peut être entraîné dans le cas où ce composé organique (A) présente un pouvoir émulsifiant même en milieu de pH neutre (égal à 7) ou basique.

Le rapport massique d'agent antimousse/additif hydrosoluble ou hydrodispersable est généralement compris entre environ 0,002 et environ 0,5, de préférence entre environ 0,005 et environ 0,1.

L'adjuvant selon l'invention peut éventuellement contenir d'autres composés, sous réserve qu'ils n'affectent pas de façon sensible la stabilité de l'émulsion. Ces composés optionnels sont de préférence hydrosolubles et sont, par exemple, des entraîneurs d'air.

La préparation de l'adjuvant selon l'invention peut être conduite de la façon suivante : il suffit d'introduire dans un mélangeur, en évitant l'incorporation d'air pendant le mélange [soit par le choix d'un matériel donné soit par l'utilisation appropriée d'un matériel donné (par exemple la vitesse de rotation)], dans l'ordre indiqué ci-après, dans un ordre différent ou simultanément : l'additif hydrosoluble ou hydrodispersable, en milieu aqueux ou seul, l'agent antimousse, le composé organique (A), à l'état d'ammonium ou d'amine non salifiée et, si nécessaire, un stabilisant minéral et/ou un acide de Brönsted pour salifier au moins partiellement la fonction amine non salifiée ou incomplètement salifiée du composé organique (A) et/ou de l'eau. Eventuellement, le pH de l'adjuvant est ajusté au moyen d'un acide ou d'une base.

Lorsque le mélange est préparé en milieu dilué (par exemple de l'ordre de 50 % en poids d'eau), il est hautement préférable d'utiliser un mélangeur permettant d'obtenir un taux de cisaillement élevé.

On peut également utiliser des prémélanges de certains des composés chimiques précités pour préparer l'adjuvant selon l'invention.

De préférence, on prépare l'adjuvant sous forme concentrée, de la façon suivante : on introduit, dans un appareil disperseur adapté à la consistance de l'adjuvant en préparation et permettant d'éviter un entraînement d'air en excès, la solution aqueuse concentrée contenant l'additif hydrosoluble ou hydrodispersable, on porte cette solution concentrée à une température de l'ordre de 60-80°C, puis on ajoute l'agent antimousse, le composé organique (A) et, si nécessaire, un stabilisant minéral et/ou un acide de Brönsted. Si nécessaire, on dilue à l'eau cet adjuvant sous forme concentrée. Egalement, si nécessaire, on ajuste le pH de l'adjuvant au moyen d'un acide ou d'une base.

La présente invention a également pour objet les suspensions aqueuses de particules minérales et les mélanges à base de liant hydraulique contenant un adjuvant tel que décrit ci-dessus, de préférence dans une proportion comprise entre environ 0,001 % et environ 10 % en poids sec de l'adjuvant, par rapport au poids (en humide) de la totalité de la suspension aqueuse de particules minérales considérée ou du mélange à base de liant hydraulique considéré.

La présente invention a aussi pour objet un procédé permettant de traiter les suspensions aqueuses de particules minérales et les mélanges à base de liant hydraulique à l'aide d'un additif hydrosoluble ou hydrodispersable et d'y contrôler le volume d'air entraîné du fait de l'introduction d'additif(s) hydrosoluble(s) ou hydrodispersable(s) à effet spécifique dans les suspensions aqueuses de particules minérales et les mélanges à base de liant hydraulique. Ce procédé est caractérisé en ce que, au début, au cours ou à la fin de la préparation de cette suspension ou de ce mélange à base d'un liant hydraulique, on additionne de 0,001 % à 10 % en poids sec de l'adjuvant selon l'invention, ce pourcentage pondéral étant rapporté au poids total (en humide) de la suspension aqueuse de particules minérales considérée ou du mélange à base de liant hydraulique considéré.

Dans la suite de la description, l'invention et ses avantages seront illustrés au travers d'exemples non limitatifs.

Les mélanges d'additifs hydrosolubles ou hydrodispersables et d'agent antimousse ont été classés en fonction de leur aspect, après cinq jours de repos et notés de 1 à 5 de la façon suivante :
Note 1 : le mélange est instable et totalement déphasé. Apparition d'une phase claire inférieure et, éventuellement, d'une phase huileuse supérieure.
Note 2 : l'ensemble du mélange a un aspect uniforme à l'exception de la partie supérieure qui présente une phase huileuse trop importante.
Note 3 : l'ensemble du mélange a un aspect uniforme. La surface présente cependant une pellicule huileuse continue. Toutefois, le mélange peut être acceptable.
Note 4 : Idem que pour note 3, mais l'hétérogénéité de surface est discontinue.
Note 5 : le mélange est stable, c'est-à-dire parfaitement uniforme soit sous la forme limpide soit sous la forme émulsionnée.

### EXEMPLES

### Exemple 1 (comparatif)

a) Préparation du dispersant phosphoné :

   H-(O-CH₂-CH₂)₆₀-O-CH₂-CH₂-N[CH₂ PO₃ H₂]₂

   Le produit est préparé en suivant les conditions opératoires de l'exemple 1 du brevet FR 2 696 736. Dans un réacteur en verre parfaitement anhydre, on introduit sous argon 500 cm³ de tétrahydrofuranne anhydre et 1,22 g d'éthanol-amine (0,02 mole). Une solution de diphénylméthylpotassium, soit 21,2 cm³ d'une solution titrée exactement à 0,95 mole/l (0,02 mole), est ajoutée goutte à goutte sous argon jusqu'à obtention d'une coloration persistante orange-brun du milieu. Il y a précipitation partielle de l'amino-alcoolate de potassium. Les entrées et les sorties d'argon étant maintenues fermées, l'oxyde d'éthylène, soit 61 cm³ (1,2 mole à 20°C), est introduit sous forme liquide, puis le réacteur est porté à 30°C. Le réacteur est alors en surpression d'environ 0,2 bar et le mélange est maintenu agité à 30°C pendant 12 heures. Au terme de la réaction,-le mélange prend une couleur cuivre. Il est acidifié par une solution de méthanol acide à 2 % en acide chlorhydrique.
   La neutralisation est atteinte lorsque le milieu se décolore en jaune clair. On élimine le chlorure de potassium par filtration ; le tétrahydrofuranne (THF) est évaporé sous vide et le résidu est versé dans un mélange constitué de 800 cm³ d'eau et 800 cm³ d'éther.
   La phase aqueuse contient le polymère aminé spécifiquement polyoxyéthylé sur l'oxygène de la fonction alcool, dont 45 g sont isolés après évaporation totale de l'eau sous vide.
   Dans un tricol d'un litre équipé d'un réfrigérant, on introduit 270 g (0,1 mole) du polymère aminé et polyoxyéthylé obtenu dans l'étape précédente, 16,4 g (0,2 mole) d'acide phosphoreux cristallisé et 12 g (0,11 mole) d'acide chlohydrique en solution aqueuse à 35 %. Le mélange est chauffé sous agitation jusqu'à 100°C, puis on introduit en cinq heures, 17,8 g (0,22 mole) d'une solution aqueuse de formaldéhyde à 37 %, et on chauffe à reflux pendant dix-sept heures.
   On obtient finalement le dispersant phosphoné.
b) Dilution et neutralisation du dispersant phosphoné :
   le produit issu du a) est dilué avec de l'eau de ville à 30 % d'extrait sec puis neutralisé à pH 4 avec une solution de diéthanolamine à 30 % dans l'eau.
c) Préparation du mélange adiuvant :
   à 20 kg du mélange issu de b), on ajoute 160 g de tributyl phosphate puis l'ensemble du produit est homogénéisé pendant 15 minutes au moyen d'un émulsionneur du type Silverson, Modèle BX.

Le mélange présente alors un aspect trouble mais non laiteux. La stabilité au repos n'est pas satisfaisante. Au bout de 5 jours au repos, on observe une couche huileuse en surface (appréciation donnée : Note 1 correspondant à une résultat insatisfaisant).

### Exemple 2

On suit les conditions opératoires de l'exemple 1 pour les parties a) et b).
A 20 kg de mélange issu de b) sont rajoutés sous agitation, mais sans formation d'un vortex, un mélange composé de 160 g de tributyl phosphate et de 260 g d'amine oléique à 2 moles d'oxyde d'éthylène commercialisé sous la dénomination NORAMOX 02 par la société C.E.C.A. Après 15 minutes d'homogénéisation, le mélange est parfaitement uniforme et stable au repos (appréciation donnée : Note 5). Le mélange a un aspect uniforme et laiteux. Son pH est inférieur à 5.

### Exemple 3

On suit les conditions opératoires de l'exemple 1 pour la partie a).
Dans un réacteur émaillé de 80 1 muni d'un réfrigérant et d'une pale d'agitation, on introduit 20 kg du mélange issu de a). On chauffe sous agitation à 80°C puis on introduit 0,96 kg d'amine oléique à 2 moles d'oxyde d'éthylène (NORAMOX 02) et 0,59 kg de tributyl phosphate. Après 5 minutes d'homogénéisation, on introduit 48 1 d'eau de ville et ensuite sur une durée de 15 minutes, 4 kg d'une solution aqueuse de diéthanolamine (DEA) à 30 %. Le mélange est alors à une température voisine de 40°C. La stabilité du mélange au repos est excellente (Note 5). Le mélange a un aspect uniforme et laiteux. Son pH est inférieur à 5.

### Exemple 4 (comparatif)

Selon le procédé décrit dans l'exemple 3, on-réalise un mélange à partir de :
- 20 kg de mélange issue de 1 a)
- 0,74 kg d'un agent antimousse commercialisé sous la dénomination SYNPERONIC PE/L61 de la société ICI à base de copolymères blocs d'oxyde d'éthylène et d'oxyde de propylène
- 4 kg de DEA à 30 %
- 48 kg d'eau de ville.
La stabilité du mélange final n'est pas acceptable (Note 2). Le mélange est trouble et instable (la séparation de phases se poursuit au cours du stockage).

### Exemple 5

Selon le procédé décrit dans l'exemple 3, on réalise un mélange à partir de :
- 20 kg de mélange issu de 1 a)
- 0,71 kg de SYNPERONIC PE/L61 de la société ICI
- 1,48 Kg d'amine oléique à 5 moles d'oxyde d'éthylène, commercialisée sous la dénomination NORAMOX 05 par la société C.E.C.A.
- 4 kg de DEA à 30 %
- 48 kg d'eau de ville.
La stabilité du mélange final est excellente (Note 5). Le mélange est limpide. Son pH est voisin de 4,5.

### Exemple 6

Selon le procédé décrit dans l'exemple 3, on réalise un mélange à partir de :
- 20 kg de mélange issu de 1 a)
- 0,59 Kg de tributyl phosphate
- 0,37 kg d'amine de suif à 1 mole d'oxyde d'éthylène, commercialisée sous la dénomination NORAMOX S1 par la société C.E.C.A.
- 4 kg de DEA à 30 %
- 48 kg d'eau de ville.
La stabilité du mélange final est bonne (Note 4). Le mélange conserve un aspect uniforme et laiteux.-Son pH est inférieur à 4.

### Exemple 7

Selon le procédé décrit dans l'exemple 3, on réalise un mélange à partir de :
- 20 kg de mélange issu de 1 a)
- 0,59 kg de tributyl phosphate
- 0,59 kg de NORAM C (amine de coprah) commercialisé par la société C.E.C.A.
- 4 kg de DEA 30 %
- 48 kg d'eau de ville.
La stabilité du mélange uniforme obtenu est bonne : Note 4. Le mélange est laiteux et son pH de l'ordre de 4.

### Exemple 8

Selon le procédé décrit dans l'exemple 3, on réalise un mélange à partir de :
- 20 kg de mélange issu de 1 a)
- 0,59 kg de tributyl phosphate
- 0,74 kg de DINORAMOX S3 (N,N',N'-tri 2 hydroxyéthyl N-suif-propylène diamine) de C.E.C.A.
- 4 kg de DEA 30 %
- 48 kg d'eau de ville.
La stabilité du mélange uniforme obtenu est moyenne : Note 3. Le mélange est laiteux. Son pH est voisin de 4,7.

### Exemple 9 (comparatif)

Selon le procédé décrit dans l'exemple 3, on réalise un mélange à partir de :
- 20 kg de mélange issu de 1 a)
- 0,74 kg d'un agent antimousse commercialisé par la société C.E.C.A. sous la dénomination MOUSSEX 900 9 HL. Il s'agit d'une huile minérale exempte de silicone.
- 4 kg de DEA 30 %
- 48 kg d'eau de ville.
La stabilité du mélange obtenu est mauvaise : Note 1.

### Exemple 10

Selon le procédé décrit dans l'exemple 3, on réalise un mélange à partir de :
- 20 kg de mélange issu de 1 a)
- 0,74 kg de MOUSSEX 900 9 HL
- 0,19 kg de NORAMOX 05 de la société C.E.C.A. Il s'agit d'une amine oléique à 5 moles d'oxyde d'éthylène.
- 4 kg de DEA 30 %
- 48 Kg d'eau de ville.
La stabilité du mélange est excellente : Note 5. Son pH est de l'ordre de 3.

### Exemple 11

Selon le procédé décrit dans l'exemple 3, on réalise un mélange à partir de :
- 20 kg de mélange issu de 1 a)
- 0,74 Kg de SYNPERONIC PE/L61
- 0,37 kg de tributyl phosphate
- 0,96 kg de NORAMOX 05
- 4 kg de DEA 30 %
- 48 kg d'eau de ville.
La stabilité du mélange uniforme est excellente : Note 5. Le mélange est limpide. Son pH est acide.

### Exemple 12

Selon le procédé décrit dans l'exemple 3, on réalise un mélange à partir de :
- 20 kg de mélange issu de 1 a)
- 0,59 kg de tributyl phosphate
- 0,74 kg de NORAMOX 02
- 0,37 kg de NORAM 0 (amine oléique) commercialisé par la société C.E.C.A.
- 4 kg de DEA
- 48 kg d'eau de ville.
La stabilité du mélange est excellente : Note 5. Le pH du mélange uniforme est acide.

### Exemple 13 (comparatif)

Selon le procédé décrit dans l'exemple 3, on réalise un mélange à partir de :
- 20 kg de mélange issu de 1 a)
- 0,59 kg de tributyl phosphate
- 4 kg de DEA à 30 %
- 48 kg d'eau de ville.
La stabilité du mélange est mauvaise : Note 1.

### Exemple 14 : EVALUATION DES MELANGES PREPARES DANS LES EXEMPLES 1 A 13 PAR MESURE D'AIR ENTRAINE SUR MORTIER

On réalise le mélange suivant :
- 450 g de ciment CEM 1 52,5 de Cormeilles ;
- 1350 g de sable AFNOR de granulométrie variant entre 0 et 2 mm ;
- 3,6 g d'un mélange renfermant au moins un agent dispersant et un agent antimousse préparé dans les exemples 1 à 13 précédents ; le mélange est soutiré au bas du stockage du mélange après 5 jours au repos.
- 202,5 g d'eau de ville.
Le mélange est réalisé suivant la méthode décrite dans la norme EN 196-1. L'air entraîné est mesuré à l'aide d'un aéromètre à mortier selon la norme d'entraînement d'air NF EN 413-2.

Les résultats des mesures de volume d'air entraîné sont reportés ci-après :

| **EXEMPLES** | **POURCENTAGE D'AIR ENTRAINE EN VOLUME SUR LE VOLUME TOTAL DU MORTIER** |
|---|---|
| 1 (comparatif) | 10,8 % |
| 2 | 6,3 % |
| 3 | 6,0 % |
| 4 (comparatif) | 8,3 % |
| 5 | 11,5 % |
| 6 | 6,2 % |
| 7 | 7,6 % |
| 8 | 7,6 % |
| 9 (comparatif) | 13,9 % |
| 10 | 9,5 % |
| 11 | 7,6 % |
| 12 | 6,3 % |
| 13 (comparatif) | 15 % |

### Exemples 15 et 16

Dans ces exemples, on a testé un dispersant polycarboxylate comportant au moins une chaîne polycarboxylique et au moins une chaîne polyéther, ci-après désigné "dispersant PCP".
Le dispersant PCP est présenté en dilution dans l'eau, avec un extrait sec de 30 %. Il se présente sous la forme d'un liquide brun opalescent. Son pH est égal à 8,5.
Après 10 semaines de repos, à température ambiante, on a constaté un déphasage de ce dispersant, avec apparition d'une phase supérieure huileuse.

Au dispersant PCP, on ajoute :
- une amine oléique à 2 moles d'oxyde d'éthylène commercialisée sous la dénomination NORAMOX 02 par la société C.E.C.A., à raison de 1 % en poids du mélange total ;
- et de l'acide sulfurique à 25 % en quantité suffisante pour atteindre un pH égal à 6,5.

On obtient un mélange "X" uniforme, stable au repos pendant plus de 10 semaines.
Ensuite, on évalue le dispersant PCP et le mélange "X" au travers de la mesure d'air entraîné sur mortier.

On prépare un mortier comprenant :
- 900 g de ciment CEM 1 52,5 de Cormeilles ;
- 2700 g de sable AFNOR de granulométrie variant entre 0 et 2 mm ;
- 9 g de dispersant PCP ou de mélange "X" soutirés au bas du stockage après 10 semaines de repos ;
- 396 g d'eau de ville.

Le mélange est réalisé suivant la méthode décrite dans la norme EN 196-1. L'air entraîné est mesuré à l'aide d'un aéromètre à mortier selon la norme d'entraînement d'air NF EN 413-2.

Les résultats des mesures de volume d'air entraîné sont reportés ci-après :

| **EXEMPLES** | **Pourcentage d'air entraîné en volume sur le volume total du mortier** |
|---|---|
| 15 (dispersant PCP) | 8,7 |
| 16 (mélange "X") | 7,7 |

### Exemples 17 et 18

Le dispersant PCP a été utilisé pour préparer quatre adjuvants référencés A1, A2, A3 et A4.

La composition de l'adjuvant A1 est la suivante (en % en poids) :
- 98,5 % de dispersant PCP (extrait sec à 30 %) ;
- 0,5 % de tributylphosphate à titre d'antimousse ;
- 1 % de NORAMOX 02.
La stabilité de l'adjuvant A1 est moyenne (Note 3). Son pH est égal à 8,5.

La composition de l'adjuvant A2 est identique à celle de l'adjuvant A1, mais son pH a été porté à 6,5 par addition d'acide sulfurique à 25 %. La stabilité de l'adjuvant A2 est excellente (Note 5) et supérieure à 10 jours.

Pour préparer l'adjuvant A3, on utilise (en % en poids) :
- 67 % du dispersant PCP ;
- 20 % du mélange obtenu à l'issue de l'étape a) de l'exemple 1 et contenant 94 % de dispersant phosphoné ;
- 3 % de tributylphosphate ;
- 3 % de NORAMOX 02 ;
- 1,6 % de sépiolite commercialisée sous la dénomination PANGEL S9 par la société Comptoir des Minéraux et Matières Premières (C.M.M.P.) ;
- 2,4 % de diéthanolamine (DEA) ;
- 3 % d'eau.

L'adjuvant A3 est un mélange uniforme et stable (note 5). Son pH est égal à 6,5.

L'adjuvant A4 est obtenu en portant le pH de l'adjuvant A3 à pH 9 par ajout de soude (à 25 %). L'adjuvant A4 est un mélange uniforme et stable au repos (note 5).

### Exemple 19

On prépare un adjuvant à partir de (en % en poids) :
- 55 % du mélange obtenu à l'issue de l'étape a) de l'exemple 1 et contenant 94 % de dispersant phosphoné ;
- 3,5 % de tributylphosphate ;
- 2 % de NORAM 0D (amine oléique) commercialisé par la société C.E.C.A. ;
- 1,6 % de sépiolite ;
- 30 % d'eau ;
- 8 % de DEA.

L'adjuvant ainsi préparé a un pH égal à 5 et se présente sous la forme d'un mélange uniforme et stable au stockage à température ambiante pendant plus de trois jours (note 5).

On a augmenté le pH de cet adjuvant par addition de soude. On a ainsi préparé deux nouveaux adjuvants, le premier ayant un pH égal à 9 et le second ayant un pH égal à 13.
Ces deux nouveaux adjuvants se présentent également sous la forme d'un mélange uniforme et stable au stockage pendant plus de trois jours à température ambiante (note 5).

### Exemple 20

On prépare un adjuvant à partir de (en % en poids) :
- 41 % du mélange obtenu à l'issue de l'étape a) de l'exemple 1 et contenant 94 % de dispersant phosphoné ;
- 6,3 % de tributylphosphate ;
- 3 % de NORAMOX 02 ;
- 1,3 % de sépiolite ;
- 37,9 % d'eau ;
- 10,5 % de DEA.

L'adjuvant ainsi préparé a un pH égal à 5 et se présente sous la forme d'un mélange uniforme et stable au stockage à température ambiante pendant plus de trois jours (note 5).

On a augmenté le pH de cet adjuvant par addition de soude. On a ainsi préparé deux nouveaux adjuvants, le premier ayant un pH égal à 9 et le second ayant un pH égal à 13.
Ces deux nouveaux adjuvants se présentent également sous la forme d'un mélange uniforme et stable au stockage pendant plus de trois jours à température ambiante.

## Revendications

1. Adjuvant pour suspensions aqueuses de particules minérales et mélanges à base de liant hydraulique, **caractérisé en ce qu'**il est sous la forme d'un mélange uniforme comprenant :
- de l'eau ;
- au moins un agent antimousse non hydrosoluble ou faiblement hydrosoluble ;
- au moins un additif, hydrosoluble ou hydrodispersable, pour suspensions aqueuses de particules minérales et mélanges à base de liant hydraulique ;
- au moins un composé organique (A) contenant :
. au moins une fonction amine primaire, secondaire ou tertiaire, éventuellement partiellement ou totalement neutralisée par un acide de Brönsted, organique ou minéral,
. et au moins une chaîne alkyle ou alkyle-aryle, linéaire ou ramifiée, saturée ou insaturée, comprenant au moins 8 atomes de carbone, et éventuellement des hétéroatomes, choisis parmi l'oxygène, le soufre ou l'azote ;
- au moins un stabilisant minéral quand le pH dudit mélange est supérieur à 7 ;
- éventuellement, un acide ou une base pour ajuster le pH dudit mélange.

2. Adjuvant selon la revendication 1, **caractérisé en ce que** son pH est inférieur à 7 et **en ce qu'**il comprend éventuellement un stabilisant minéral.

3. Adjuvant selon la revendication 2, **caractérisé en ce que** son pH est inférieur ou égal à 6.

4. Adjuvant selon la revendication 3, **caractérisé en ce que** son pH est compris entre 2 et 6 (inclus).

5. Adjuvant selon l'une quelconque des revendications 1 à 4, **caractérisé en ce que** la chaîne alkyle ou alkyle-aryle du composé organique (A) comprend au moins 12 atomes de carbone.

6. Adjuvant selon l'une quelconque des revendications 1 à 5, **caractérisé en ce que** la granulométrie du stabilisant minéral est telle qu'au moins 90 % des grains passent au travers d'un tamis à mailles carrées de 50 µm de côté.

7. Adjuvant selon la revendication 6, **caractérisé en ce que** au moins 90 % des grains passent au travers d'un tamis à mailles carrées de 10 µm de côté.

8. Adjuvant selon l'une quelconque des revendications 1 à 7, **caractérisé en ce que** le stabilisant minéral présente une capacité de développer une viscosité supplémentaire en présence d'eau et sous l'effet d'un gradient de cisaillement.

9. Adjuvant selon la revendication 8, **caractérisé en ce que** le stabilisant minéral est choisi parmi les argiles.

10. Adjuvant selon la revendication 9, **caractérisé en ce que** le stabilisant minéral est choisi parmi les bentonites et les sépiolites.

11. Adjuvant selon l'une quelconque des revendications 1 à 10, **caractérisé en ce que** le composé organique (A) a pour formule : 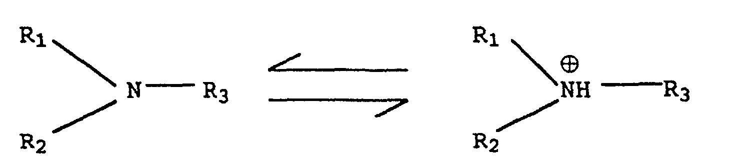 dans laquelle :
- R₁ est une chaîne alkyle ou alkyle-aryle, linéaire ou ramifiée., saturée ou insaturée, contenant au moins 8 atomes de carbone, de préférence au moins 12 atomes de carbone, encore mieux au plus 22 atomes de carbone. Eventuellement, R₁ peut comprendre un ou plusieurs hétéroatomes choisis parmi l'oxygène, l'azote ou le soufre pour former des groupes fonctionnels comme des groupes éthers ou thioéthers ou des groupes alcools ou thioalcools ;
- R₂ est un atome d'hydrogène, ou une chaîne de motifs oxyalkylènes R₄-O où les R₄ sont semblables ou différents entre eux et représentent un alkylène comme l'éthylène, le propylène ou le butylène, cette chaîne de motifs oxyalkylènes R₄-O comportant en position terminale un atome d'hydrogène ou un groupe alkyle ou alkyle-aryle ;
- R₃ est un atome d'hydrogène ou un radical indépendamment choisi parmi les définitions susmentionnées pour R₁ et R₂ ;
- le nombre total de motifs (R₄-O) pouvant être présents dans R₂ et R₃, lorsque R₄ est l'éthylène, est de préférence au maximum égal à 12, de préférence encore au maximum égal à 8.

12. Adjuvant selon la revendication 11, **caractérisé en ce que** le nombre total de motifs (R₄-O), lorsque R₄ est l'éthylène, est au plus égal à 8.

13. Adjuvant selon la revendication 11, **caractérisé en ce que** le nombre total de motifs (R₄-O), lorsque R₄ est le propylène ou le butylène, est au plus égal à 5.

14. Adjuvant selon la revendication 11, **caractérisé en ce que** le composé organique (A) est choisi parmi le groupe constitué par l'amine oléique et les dérivés de l'amine oléique, les amines étant protonées ou non.

15. Adjuvant selon la revendication 11, **caractérisé en ce que** le composé organique (A) est choisi parmi les amines, protonées ou non, suivantes : le N,N-bis(2 hydroxyéthyl)oleylamine ; l'amine oléique à cinq moles d'oxyde d'éthylène ; l'amine oléique, l'amine de coprah et l'amine de suif, chacune de ces amines ayant une mole d'oxyde d'éthylène.

16. Adjuvant selon l'une quelconque des revendications précédentes, **caractérisé en ce que** l'additif hydrosoluble ou hydrodispersable est choisi parmi les agents permettant de réduire la quantité d'eau de gâchage, les dispersants, les fluidifiants, les plastifiants, les hydrofuges de masse, les retardateurs ou accélérateurs de prise ou de durcissement, ou un mélange des additifs précités.

17. Adjuvant selon la revendication 16, **caractérisé en ce que** l'additif hydrosoluble ou hydrodispersable comprend au moins une chaîne polyéther.

18. Adjuvant selon la revendication 17, **caractérisé en ce que** l'additif est un dispersant comportant une ou plusieurs chaînes polycarboxyliques et une ou plusieurs chaînes polyéthers ou un dispersant comportant au moins un groupement amino-alkylène phosphonique, éventuellement salifié, et au moins une chaîne polyoxyalkylée.

19. Adjuvant selon l'une quelconque des revendications précédentes, **caractérisé en ce que** l'agent antimousse est choisi parmi des huiles minérales, les copolymères d'oxyde d'éthylène/oxyde de propylène, les esters phosphoriques et les alkylpolyalkoxyesters.

20. Adjuvant selon la revendication 19, **caractérisé en ce que** l'agent antimousse est un ester phosphorique.

21. Adjuvant selon l'une quelconque des revendications précédentes, **caractérisé en ce que** l'agent antimousse est miscible avec le composé organique (A).

22. Adjuvant selon l'une quelconque des revendications précédentes, **caractérisé en ce qu'**il est prêt à l'emploi.

23. Adjuvant selon l'une quelconque des revendications précédentes, **caractérisé en ce que** l'extrait sec de l'adjuvant peut varier entre environ 5 % en poids et environ 80 % en poids, de préférence entre environ 10 % en poids et environ 70 % en poids, encore mieux entre environ 20 % en poids et environ 60 % en poids.

24. Adjuvant selon l'une quelconque des revendications précédentes, **caractérisé en ce que** le rapport massique de composé organique (A) sur l'agent antimousse est compris entre environ 0,01 et environ 5.

25. Adjuvant selon l'une quelconque des revendications précédentes, **caractérisé en ce que** le rapport massique d'agent antimousse sur l'additif hydrosoluble ou hydrodispersable est compris entre environ 0,002 et environ 0,5, de préférence entre environ 0,005 et 0,1.

26. Suspensions aqueuses de particules minérales et mélanges à base de liant hydraulique renfermant d'environ 0,001 % à environ 10 % en poids sec d'un adjuvant selon l'une quelconque des revendications 1 à 25, ce pourcentage pondéral étant rapporté au poids total, en humide, de la suspension aqueuse de particules minérales ou du mélange à base de liant hydraulique.

27. Procédé permettant de traiter les suspensions aqueuses de particules minérales et les mélanges à base de liant hydraulique à l'aide d'un additif hydrosoluble ou hydrodispersable et de contrôler le volume d'air entraîné, **caractérisé en ce que**, au début, au cours ou à la fin de la préparation de cette suspension ou de ce mélange à base d'un liant hydraulique, on additionne de 0,001 % à 10 % en poids sec de l'adjuvant selon l'une des revendications 1 à 25, ce pourcentage pondéral étant rapporté au poids total, en humide, de la suspension aqueuse de particules minérales ou du mélange à base de liant hydraulique.

## Patentansprüche

1. Zusatzmittel für wässrige Suspensionen von anorganischen partikeln und hydraulischen Bindemittelgemischen, **dadurch gekennzeichnet, dass** es in Form einer einheitlichen Mischung vorliegt, die umfasst:
- Wasser;
- mindestens ein nicht wasserlöslichen oder schwach wasserlöslichen Entschaümer;
- mindestens einen wasserlöslichen oder in Wasser dispergierbaren Zusatz für wässrige Suspensionen von anorganischen partikeln und hydraulischen Bindemittelgemischen;
- mindestens eine organische Verbindung (A), die enthält:
• mindestens eine primäre, sekundäre oder tertiäre Aminfunktion, die möglicherweise teilweise oder vollständig mit einer Brönsted-, organischen oder anorganischen Säure neutralisiert ist, und
• mindestens eine gesättigte oder ungesättigte, geradkettig oder verzweigte Alkyl- oder Alkylarylkette, die mindestens 8 Kohlenstoffatome, und möglicherweise Heteroatome enthält, ausgewählt unter dem Sauerstoff, dem Schwefel oder dem Stickstoff;
- mindestens ein anorganisches Stabilisierungsmittel, wenn der pH-Wert der Mischung über 7 liegt; und
- möglicherweise eine Säure oder eine Base um den pH-Wert der Mischung einzustellen.

2. Zusatzmittel nach Anspruch 1, **dadurch gekennzeichnet, dass** sein pH-Wert unter 7 liegt und dass es möglicherweise ein anorganisches Stabilisierungsmittel umfasst.

3. Zusatzmittel nach Anspruch 2, **dadurch gekennzeichnet, dass** sein pH-Wert niedriger oder gleich 6 liegt.

4. Zusatzmittel nach Anspruch 3, **dadurch gekennzeichnet, dass** sein pH-Wert zwischen 2 und 6 liegt (einschließlich).

5. Zusatzmittel nach einem der Ansprüche 1 bis 4, **dadurch gekennzeichnet, dass** die Alkyl- oder Alkylarylkette der organischen Verbindung (A) mindestens 12 Kohlenstoffatome umfasst.

6. Zusatzmittel nach einem der Ansprüche 1 bis 5, **dadurch gekennzeichnet, dass** die Korngrössenbestimmung des anorganischen Stabilisierungsmittels so ist, dass mindestens 90 % der Körnchen durch ein Sieb mit quadratischen Maschen mit einer Seitenlänge von 50 um gehen.

7. Zusatzmittel nach Anspruch 6, **dadurch gekennzeichnet, dass** mindestens 90 % der Körnchen durch ein Sieb mit quadratischen Maschen mit einer Seitenlänge von 10 µm gehen.

8. Zusatzmittel nach einem der Ansprüche 1 bis 7, **dadurch gekennzeichnet, dass** das anorganische Stabilisierungsmittel die Fähigkeit hat, in Gegenwart von Wasser und unter der Wirkung eines Schergefälles, die Viskosität zu erhöhen.

9. Zusatzmittel nach Anspruch 8, **dadurch gekennzeichnet, dass** das anorganische Stabilisierungsmittel unter den Tonen ausgewählt ist.

10. Zusatzmittel nach Anspruch 9, **dadurch gekennzeichnet, dass** das anorganische Stabilisierungsmittel unter den Bentoniten und Sepiolithen ausgewählt ist.

11. Zusatzmittel nach einem der Ansprüche 1 bis 10, **dadurch gekennzeichnet, dass** die organische Verbindung (A) die Formel hat: 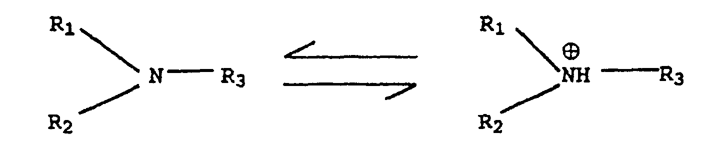 worin:
- R₁ steht für eine gesättigte oder ungesättigte, geradkettig oder verzweigte Alkyl- oder Alkylarylkette, die mindestens 8 Kohlenstoffatome, vorzugsweise mindestens 12 Kohlenstoffatome, noch besser höchstens 22 Kohlenstoffatome enthält. Möglicherweise R₁ kann ein oder mehrere Heteroatome enthalten, ausgewählt unter dem Sauerstoff, dem Stickstoff oder dem Schwefel, um funktionelle Gruppen als Ether- oder Thioethergruppen oder Alkohol- oder Thioalkoholgruppen zu bilden;
- R₂ steht für ein Wasserstoffatom oder eine Kette mit Oxyalkylen-Einheiten R₄-O, worin die R₄ untereinander gleich oder verschieden sind und ein Alkylen wie Ethylen, Propylen oder Butylen darstellen, diese Kette von Oxyalkylen-Einheiten R₄-O enthält in der terminalen Position ein Wasserstoffatom oder eine Alkyl- oder Alkylarylgruppe;
- R₃ steht für ein Wasserstoffatom oder einen Alkylrest, der unabhängig ausgewählt wird unter den obenerwähnten Definitionen für R₁ und R₂; und
- die Gesamtanzahl der Einheiten (R₄-O), die in R₂ und R₃ vorliegen können, wenn R₄ für Ethylen steht, vorzugsweise höchstens 12, vorzugsweise noch höchstens 8 beträgt.

12. Zusatzmittel nach Anspruch 11, **dadurch gekennzeichnet, dass** die Gesamtanzahl der Einheiten (R₄-O), wenn R₄ für Ethylen steht, höchstens 8 beträgt.

13. Zusatzmittel nach Anspruch 11, **dadurch gekennzeichnet, dass** die Gesamtanzahl der Einheiten (R₄-O), wenn R₄ für Propylen oder Butylen steht, höchstens 5 beträgt.

14. Zusatzmittel nach Anspruch 11, **dadurch gekennzeichnet, dass** die organische Verbindung (A) unter der Gruppe, die von Oleylamin und den Derivaten von Oleylamin gebildet wird, ausgewählt ist, wobei die Amine protoniert oder nicht protoniert sind.

15. Zusatzmittel nach Anspruch 11, **dadurch gekennzeichnet, dass** die organische Verbindung (A) unter den folgenden protonierten oder nicht protonierten Aminen: N,N-Bis(2-hydroxyethyl)oleylamin; Oleylamin mit 5 mol Ethylenoxid; Oleylamin, Kopraamin und Talgamin ausgewählt ist, wobei jedes dieser Amine 1 mol Ethylenoxid enthält.

16. Zusatzmittel nach einem der vorhergehenden Ansprüche, **dadurch gekennzeichnet, dass** der wasserlösliche oder in Wasser dispergierbare Zusatz unter den Wirkstoffen, die Verringerung der Menge des Anrührwassers erlauben, den Dispersiermitteln, den Verflüssiger, den Plastiziermitteln, den Betondichtungsmitteln, den Abbinde- oder Aushärtungsverzögerungs- oder -beschleunigungsmitteln oder einer Mischung der genannten Zusätze, ausgewählt ist.

17. Zusatzmittel nach Anspruch 16, **dadurch gekennzeichnet, dass** der wasserlösliche oder in Wasser dispergierbare Zusatz mindestens eine Polyetherkette umfasst.

18. Zusatzmittel nach Anspruch 17, **dadurch gekennzeichnet, dass** der Zusatz ein Dispersiermittel ist, das ein oder mehrere Polycarbonsäureketten und ein oder mehrere Polyetherketten umfasst, oder ein Dispersiermittel, das mindestens eine Aminoalkylenphosphonsäuregruppe, möglicherweise in ein Salz überführte, und mindestens eine Polyoxyalkylkette umfasst.

19. Zusatzmittel nach einem der vorhergehenden Ansprüche, **dadurch gekennzeichnet, dass** der Entschaümer unter den Mineralölen, den Ethylenoxid/Propylenoxid-Copolymeren, den Phosphorsäureestern und den Alkylpolyalkoxyestern ausgewählt ist.

20. Zusatzmittel nach Anspruch 19, **dadurch gekennzeichnet, dass** der Entschaümer ein Phosphorsäureester ist.

21. Zusatzmittel nach einem der vorhergehenden Ansprüche, **dadurch gekennzeichnet, dass** der Entschaümer mit der organischen Verbindung (A) mischbar ist.

22. Zusatzmittel nach einem der vorhergehenden Ansprüche, **dadurch gekennzeichnet, dass** es gebrauchsfertig ist.

23. Zusatzmittel nach einem der vorhergehenden Ansprüche, **dadurch gekennzeichnet, dass** der Trockenextrakt des Zusatzmittels zwischen etwa 5 und etwa 80 Gew.-%, vorzugsweise zwischen etwa 10 und etwa 70 Gew.-%, noch besser zwischen etwa 20 und etwa 60 Gew.-% variieren kann.

24. Zusatzmittel nach einem der vorhergehenden Ansprüche, **dadurch gekennzeichnet, dass** das Massenverhältnis zwischen der organischen Verbindung (A) und dem Entschaümer zwischen etwa 0,1 und etwa 5 liegt.

25. Zusatzmittel nach einem der vorhergehenden Ansprüche, **dadurch gekennzeichnet, dass** das Massenverhältnis zwischen dem Entschaümer und dem wasserlöslichen oder in Wasser dispergierbaren Zusatz zwischen etwa 0,002 und 0,5, vorzugsweise zwischen etwa 0,005 und 0,1 liegt.

26. Wässrige Suspensionen von anorganischen Partikeln und hydraulischen Bindemittelgemischen, die etwa 0,001 bis etwa 10 Trockengewichtsprozent eines Zusatzmittels nach einem der Ansprüche 1 bis 25 enthalten, wobei dieser Gewichtsprozentsatz auf das Gesamt-Nassgewicht der wässrigen Suspension von anorganischen Partikeln und hydraulischen Bindemittelgemischen? bezogen ist.

27. Verfahren um wässrigen Suspensionen von anorganischen Partikeln und hydraulischen Bindemittelgemischen mit einem wasserlöslichen oder in Wasser dispergierbaren Zusatz zu behandeln und um des eingeschlossenen Luftvolumens zu untersuchen, **dadurch gekennzeichnet, dass** am Beginn der Herstellung, während der Herstellung oder am Ende der Herstellung dieser Suspension oder diesem hydraulischen Bindemittelgemischen 0,001 bis 10 Trockengewichtsprozent des Zusatzmittels nach einem der Ansprüche 1 bis 25 zugegeben werden, wobei dieser Gewichtsprozentsatz auf das Nass-Gesamtgewicht der wässrigen Suspension von anorganischen Partikeln oder dem hydraulischen Bindemittelgemischen bezogen ist.

## Claims

1. Additive for aqueous suspensions of mineral particles and hydraulic mortar base mixtures, **characterised in that** it is in the form of uniform mixture comprising:
- water;
- at least one anti-foaming non water-soluble or slightly water-soluble agent;
- at least one additive, water-soluble or water dispersible, for aqueous suspensions of mineral particles and hydraulic mortar base mixtures;
- at least one organic compound (A) containing:
• at least one primary, secondary or tertiary amine function, possibly partially or totally neutralized by an organic or mineral Brönsted acid,
• and at least one alkyl or alkyl-aryl chain, linear or branched, saturated or unsaturated, comprising at least 8 carbon atoms and possibly heteroatoms, selected from oxygen, sulphur or nitrogen;
- at least one mineral stabilizer when the pH of said mixture is greater than 7;
- possibly, an acid or base to adjust the pH of said mixture.

2. Additive according to claim 1, **characterised in that** its pH is less than 7 and **in that** it possibly comprises a mineral stabilizer.

3. Additive according to claim 2, **characterised in that** its pH is less than or equal to 6.

4. Additive according to claim 3, **characterised in that** its pH is between 2 and 6 (included).

5. Additive according to any one of claims 1 to 4, **characterised in that** the alkyl or alkyl-aryl chain of the organic compound (A) comprises at least 12 carbon atoms.

6. Additive according to any one of claims 1 to 5, **characterised in that** the grain size distribution of the mineral stabilizer is such that at least 90% of the grains pass through a sieve with a square mesh having sides of 50 µm.

7. Additive according to claim 6, **characterised in that** at least 90% of the grains pass through a sieve with a square mesh having sides of 10 µm.

8. Additive according to any one of claims 1 to 7, **characterised in that** the mineral stabilizer has a capacity to increase the viscosity in the presence of water and under the effect of a shear rate.

9. Additive according to claim 8, **characterised in that** the mineral stabilizer is selected from clays.

10. Additive according to claim 9, **characterised in that** the mineral stabilizer is selected from bentonites and sepiolites.

11. Additive according to any one of claims 1 to 10, **characterised in that** the organic compound (A) has the formula: 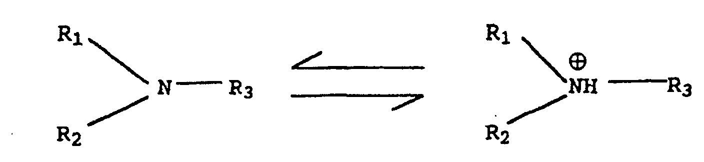 in which:
- R₁ is an alkyl or alky-aryl chain, linear or branched, saturated or unsaturated, containing at least 8 carbon atoms, preferably at least 12 carbon atoms, more preferably at most 22 carbon atoms. Possibly, R₁ may comprise one or more heteroatoms selected from oxygen, nitrogen or sulphur to form functional groups such as ether or thioether groups or alcohol or thioalcohol groups;
- R₂ is a hydrogen atom, or a chain of oxyalkylene units R₄-O wherein the R₄ are similar or different to one another and represent an aklylene such as ethylene, propylene or butylene, this chain of oxyalkylene units R₄-O comprising a hydrogen atom or an alkyl or alky-aryl group at the terminal position;
- R₃ is a hydrogen atom or a radical independently selected from the above-mentioned definitions for R₁ and R₂;
- the total number of units (R₄-O) which can be present in R₂ and R₃ when R₄ is ethylene is preferably at most equal to 12, more preferably at most equal to 8.

12. Additive according to claim 11, **characterised in that** the total number of units (R₄-O) is at most equal to 8, when R₄ is ethylene.

13. Additive according to claim 11, **characterised in that** the total number of units (R₄-O), when R₄ is propylene or butylene, is at most equal to 5.

14. Additive according to claim 11, **characterised in that** the organic compound (A) is selected from the group consisting of oleic amine and the derivatives of oleic amine, the amines being protonated or not protonated.

15. Additive according to claim 11, **characterised in that** the organic compound (A) is selected from the following protonated or unprotonated amines: N,N-bis(2 hydroxyethyl)oleylamine; oleic amine with 5 mol ethylene oxide; oleic amine, copra amine and tallow amine, each of these amines having 1 mol ethylene oxide.

16. Additive according to any one of the preceding claims, **characterised in that** the water-soluble or water dispersible additive is selected from agents allowing the quantity of mixing water to be reduced, the dispersing agents, the liquefiers, the plasticizers, the waterproofing compounds, the setting or hardening retarders or accelerators, or a mixture of the above-mentioned additives.

17. Additive according to claim 16, **characterised in that** the water-soluble or water dispersible additive comprises at least one polyether chain.

18. Additive according to claim 17, **characterised in that** the additive is a dispersing agent comprising one or more polycarboxylic chains and one or more polyether chains or a dispersing agent comprising at least one phosphonic aminoalkylene group, possibly in salt form, and at least one polyoxyalkylated chain.

19. Additive according to any one of the preceding claims, **characterised in that** the antifoaming agent is selected from mineral oils, ethylene oxide/propylene oxide copolymers, phosphoric esters and alkylpolyalkoxyesters.

20. Additive according to claim 19, **characterised in that** the antifoaming agent is a phosphoric ester.

21. Additive according to any one of the preceding claims, **characterised in that** the antifoaming agent can be mixed with the organic compound (A).

22. Additive according to any one of the preceding claims, **characterised in that** it is ready for use.

23. Additive according to any one of the preceding claims, **characterised in that** the dry extract of the adjuvant may vary between about 5% by weight and about 80% by weight, preferably between about 10% by weight and about 70% by weight, more preferably between about 20% by weight and about 60% by weight.

24. Additive according to any one of the preceding claims, **characterised in that** the mass ratio of the organic compound (A) to the antifoaming agent is between about 0.1 and about 5.

25. Additive according to any one of the preceding claims, **characterised in that** the mass ratio of antifoaming agent to the water-soluble or water dispersible additive is between about 0.002 and about 0.5, preferably between about 0.005 and 0.1.

26. Aqueous suspensions of mineral particles and hydraulic mortar base mixtures including about 0.001% to about 10% by dry weight of an additive according to any one of claims 1 to 25, this percentage by weight being based on the total weight, when moist, of the aqueous suspension of mineral particles or of the mixture based on hydraulic binder.

27. Method for treating aqueous suspensions of mineral particles and hydraulic mortar base mixtures by means of an water-soluble or water dispersible additive and for controlling the volume of entrained air, **characterised in that**, at the start of, during or at the end of the preparation of this suspension or this hydraulic mortar base mixture, 0.001% to 10% by dry weight of the additive according to any one of claims 1 to 25 are added, this percentage by weight being based on the total weight, when moist, of the aqueous suspension of mineral particles or of the hydraulic mortar base mixture.
